Europäisches Patentamt

European Patent Office

Office européen des brevets

(11) Publication number: **0 091 222**
**B1**

# EUROPEAN PATENT SPECIFICATION

(45) Date of publication of patent specification: **29.10.86**

(21) Application number: **83301474.9**

(22) Date of filing: **16.03.83**

(51) Int. Cl.⁴: **B 23 K 20/24**

(54) Process for the diffusion bonding of aluminium based materials.

(30) Priority: **06.04.82 GB 8210145**

(43) Date of publication of application:
**12.10.83 Bulletin 83/41**

(45) Publication of the grant of the patent:
**29.10.86 Bulletin 86/44**

(84) Designated Contracting States:
**CH DE FR IT LI NL SE**

(73) Proprietor: **The Secretary of State for Defence in Her Britannic Majesty's Government of the United Kingdom of Great Britain and Northern Ireland Whitehall London SW1A 2HB (GB)**

(72) Inventor: **Partridge, Peter George
1 Park Avenue
Camberley Surrey (GB)**
Inventor: **Harvey, John
Pippins Hazeley Bottom
Hartley Witney Hampshire (GB)**

(74) Representative: **Miller, Ronald Anthony et al
Procurement Executive, Ministry of Defence
Patents 1A4, Room 2014 Empress State Building
Lillie Road
London SW6 1TR (GB)**

(56) References cited:
EP-A-0 001 220
CH-A- 418 789
GB-A-1 544 201
US-A-3 180 022
US-A-4 245 768

"Recent Advances in Ionplating" by DM Mattox
Proc. 6th Intern & Vacuum Congr. 1974

Courier Press, Leamington Spa, England.

## Description

The present invention relates to a process for diffusion bonding aluminium based materials.

High strength precipitation hardening aluminium alloys are difficult to join by fusion welding techniques. Brazing alloys have been developed for many of these aluminium alloys but however the joint strengths do not approach parent metal strength.

One of the known problems faced in joining aluminium based materials is that posed by the tenacious oxide film present on these materials under virtually all conditions. Work has been carried out in the past to remove the oxide film chemically followed by electroplating or vacuum deposition of a coating metal. Silver has attracted attention for use as a coating metal because its oxide decomposes on heating before substantial diffusion of the coating into the alloy occurs. It is considered that chemical removal of oxide film for aluminium based materials is not sufficiently effective for use in a diffusion bonding processes.

British patent 1544201 discloses an alternative approach to oxide removal in connection with a brazing process for aluminium alloys for applications such as electrical connections. The approach adopted is to remove the oxide by ion bombardment and to follow the oxide removal by ion plating the cleaned material with a coating metal. The overall bonding process described in this reference is unlikely to be of utility in providing structural joints in the high strength precipitation hardening alloys of principal interest in connection with the present invention.

The combination of ion-bombardment oxide removal and ion plating in relation to the ion plating art is disclosed in an article of D M Matlox entitled "Recent Advances in Ion Plating" which is published in the Proceedings of the Sixth International Vacuum Congress 1974 — Japanese Journal of Applied Physics Supplement 2 Part 1 1974. This document discloses the advantage of beginning ion plating whilst maintaining ion bombardment so as to form a film without surface recontamination. The document does not relate the above mentioned combination to a diffusion bonding process nor does it disclose any other factors pertinent to such a process.

Diffusion bonding is an attractive alternative to fusion welding and brazing. Some of the advantages of diffusion bonding which have been demonstrated on alloys other than aluminium based alloys include:

1. Parent metal strength may be obtained.
2. Large area joints are possible.
3. Bonding involves minimum distortion and deformation and close dimensional control is possible.
4. No corrosion arises from fillers or fluxes at the joint interface.
5. Thick and thin sections can be joined to each other.
6. Cast, wrought and sintered powder products and dissimilar metals can be joined.
7. Machining costs may be reduced.
8. More efficient design may be possible.

Many previous attempts to diffusion bond aluminium alloys have been thwarted by the previously mentioned problem of the tenacious oxide film. It is known that diffusion bonding processes encompass two different regimes: the solid state process and the liquid phase process. In the former all the interdiffusion and bonding is accomplished in the solid state. In the latter, solid state interdiffusion between dissimilar metals results in the formulation of a phase which is liquid of the bonding temperate. One disclosure of a diffusion bonding process for aluminium or aluminium alloys is that provided by USA patent 3180022. That document relates to a liquid phase diffusion bonding process. The bonding temperature for a silver coating, aluminium/silver eutectic regime is 1060—1090°F (571—588°C) and the coating layer, although described as a very thin one is in the range 2.5—25 μm. It is considered that the disadvantages of this process in relation at least to high strength precipitation hardening aluminium alloys will be apparent to those skilled in the art.

Bond strengths achieved in diffusion bonding processes for aluminium based materials depend critically on the thickness of any residual oxide layer between alloy and coating. It is considered that prior art attempts to diffusion bond aluminium alloys have not satisfactorily removed the oxide film. Attempts have been made to improve such diffusion bonding processes by use of a transient liquid phase (the liquid phase diffusion process) by use of a soft interface layer or by causing large plastic deformation. However these techniques only achieve partial success and the resulting bond strengths have not achieved parent metal levels.

According to the present invention is a bonding process for aluminium based materials, which process includes:

i. removing the oxide film from the materials, in at least the regions to be bonded, by an ion bombardment technique; and

ii. depositing a coating of a metal, which has a thermally degradable oxide upon the thus treated materials, in at least the regions to be bonded, wherein at least the initial stage of the coating process is performed by ion plating and commenced whilst the ion bombardment treatment is maintained;

the process being characterised is that it is a diffusion process for aluminium based materials (such processes being known per se), in that it utilises clad materials (such materials being known per se) and in that it comprises the following features in combination:

a. deposition in the aforementioned deposition of a coating of a metal which, in addition to having a thermally degradable oxide, is one having substantial solubility in the aluminium based material at the

# 0 091 222

temperature of diffusion bonding the deposition being to a thickness of 10—1000 nm;

b. solid state diffusion bonding the coated aluminium based materials together; and

c. solution heat treating the bonded materials to diffuse away from the bond interface concentrations of the coating metal.

The term 'clad materials' as used herein refers to those materials well known for instance in regard to airframe structures having a corrosion resistant coating of Al—1% Zn or the like. Such materials are commercially available in the clad form.

The term 'thermally degradable oxide' means an oxide form which decomposes on heating to a temperature suitable for solid state diffusion bonding. A preferred coating metal is silver, this having the required characteristic of solubility in aluminium alloys and having an oxide which decomposes at 190°C. The solution heat treatment is a treatment conventional in the metallurgy of aluminium alloys. In the diffusion bonding process of the invention it serves the special purpose of diffusing away from the joint interface those concentrations of coating metal which could otherwise cause interface brittleness.

In addition to silver other possible coating metals are magnesium zinc or copper. The coating alloy need not be a pure metal but might comprise an alloy such as those based on magnesium-lithium, magnesium-silver and magnesium-zinc. However, the process of the invention is a solid state diffusion bonding process so the bonding temperature is such that all materials remain solid.

By use of the process of the invention clad aluminium alloys have been diffusion bonded to give bonds having superior strength to that of the adjacent cladding.

In order that the invention may be more fully understood an example will now be described with reference to the accompanying drawings, of which:

Figure 1 shows a schematic view of the apparatus used to clean and coat aluminium alloy samples prior to diffusion bonding.

Figure 2 shows a schematic view of the apparatus used to diffusion bond the cleaned and coated aluminium alloy samples, and

Figure 3 shows a photomicrograph of the bond interface area after post diffusion bonding heat treatment showing grain structure to be continous across the interface.

Samples of 7010 alloy 12 × 110 × 3.24 mm thick clad with aluminium — 1% zinc to a thickness of 5% on each surface were coated with silver by the process described below. The clad alloy was to a specification X166—T7651 and was used in the as-received condition apart from degreasing in trichloroethane and acetone. The silver coating was obtained by evaporation from molten 99.95% silver.

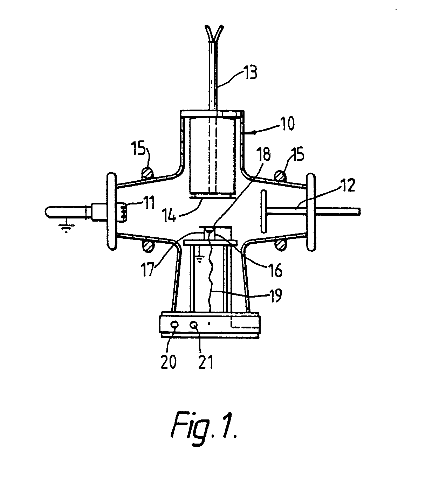

Reference is made to figure 1. Cleaning and ion-plating of the aluminium alloy specimens is carried out in a triode sputtering apparatus. The apparatus comprises a glass low-pressure vessel 10 and an anode 12 mounted on the opposite side of the vessel. Mounted on a vertically adjustable support which forms the cathode 13 are the aluminium alloy specimens 14. Circular electromagnetic coils 15 are mounted on the horizontal limbs of the vessel 10 such that they individually encircle the tungsten filament 11 and anode 12. Vertically below the specimens 14 is a carbon-glass crucible 16 containing silver heated by a radiant heater 17, above the crucible 16 is a removable shutter 18, the temperature of the crucible 16 is monitored by a thermocouple 19. Mounted on the base support of the low pressure vessel 10 is an argon gas inlet valve 20 and an air inlet valve 21. A vacuum pump 22 (not shown) is used to evacuate the vessel 10.

In operation degreased specimens 14 of the aluminium alloy are placed on the specimen support and cathode 13. The glass low pressure vessel 10 is pumped down using the vacuum pump 22 (not shown) to a pressure of $1.3 \times 10^{-3}$ Pa ($1 \times 10^{-5}$ torr), argon is then leaked continuously into the apparatus through the valve 20 until the pressure has risen to 0.27 Pa ($2 \times 10^{-3}$ torr). The anode 12 is maintained at a potential of +30V with respect to the heated tungsten filament 11 and a plasma is then generated having the parameters given below in Table 1. .

TABLE 1

| Magnetic coil (15) current (Amp) | Filament current (Amp) | Argon gas Pressure (Pa) | Discharge | | Ht on Specimen (14) | | |
|---|---|---|---|---|---|---|---|
| | | | Volts | Amp | Volts | mA | Spluttering time (min) |
| 2 | 20 | 0.27 | 30 | 4 | 1000 | 140 | 20 |

1 kV is applied to the specimen support/cathode 13 and, as a result of the plasma present the current flow is 140 mA to the specimen 14, corresponding to a current density of 1 mA/cm$^2$ for the size of specimen used due to impingement of argon ions. Spluttering is continued for 20 minutes whereupon the shutter 18 above the crucible 16 is opened, the crucible and silver contents having already been heated to the required

3

temperature by means of the radiant heater 17. The initial layers of silver deposited on the specimens 14 are thus produced under ion-plating conditions where some of the silver atoms evaporated from the crucible 16 are ionised by the plasma and accelerated onto the specimens 14, the process enhancing adhesion of the initial silver layers.

After the shutter 18 has been open for 30 seconds the negative potential of kV applied to the specimen support/cathode 13 is removed, the argon leak via the valve 20 closed and the gas discharge thus extinguished.

Evaporation of silver is continued for 12 minutes after which a coating of approximately 0.7 μm thickness is achieved. After coating and cooling the specimens 14 the vacuum is released by admitting air into the vessel 10 through the valve 21.

Conditions used to deposit the coating are summarised in Table 2 below.

TABLE 2

| Specimen distance from source (mm) | Evaporation | | Coating |
|---|---|---|---|
| | Time (min) | Temperature (°C) | |
| 65 | 12 | 1140 | Ag |

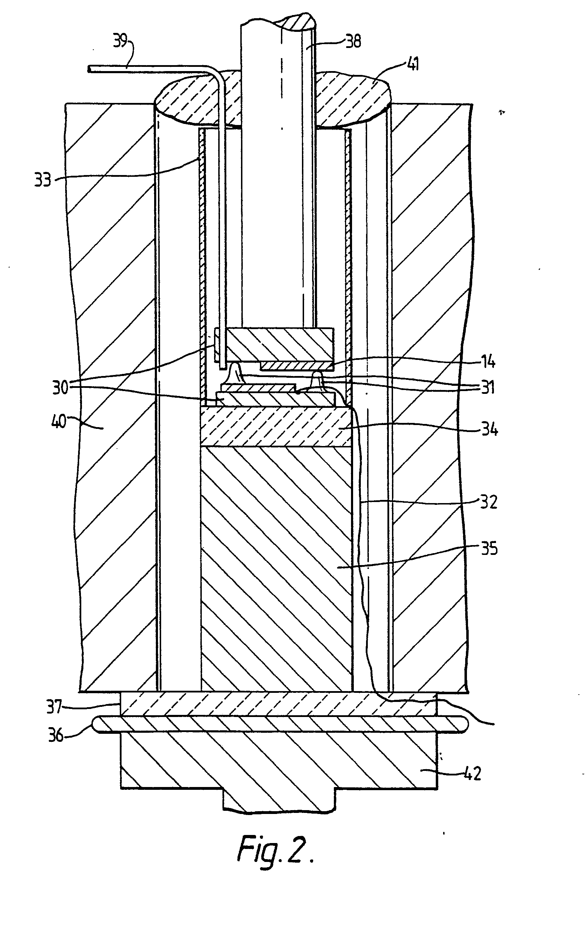

Referring now to Figure 2 aluminium alloy specimens coated as above are now diffusion bonded using the following procedure. The coated specimens 14 are held in a stainless steel jig 30 with a gap of approximately 3 mm between them, the specimens being supported and held apart by aluminium foil spacers 31. A 10 mm overlap is provided between the specimen 14 ends giving an eventual bonded area of approximately 120 sq mm. A thermocouple 32 is attached to the jig 30 specimen 14 assembly to control the temperature thereof. The jig 30 carrying the specimens 14 is enclosed in a silica glass tube 33 which is supported on a ceramic insulator 34 which in turn rests upon a stainless steel pillar 35. The pillar 35 rests upon a water cooled copper plate 36 but is insulated therefrom by a ceramic spacer 37. The bonding load is applied to the specimens by a steel push rod 38. A feed pipe 39 supplies argon gas to the silica glass tube 33 and is arranged to direct gas into the gap between the specimen 14 surfaces to be bonded. The assembly described above is surrounded by an electrical resistance heated furnace 40. Alumina insulating blanket 41 is placed in the neck of the furnace 40 and around the steel push rod 38. The total apparatus described above is supported on the load cell 42 of an Instron testing machine.

The air in the glass tube 33 is displaced before bonding by argon gas introduced through the pipe 39. The specimens 14 are heated by the furnace 40. At about 190°C the silver oxide decomposes and the decomposition products are dispersed by the argon gas jet. The temperature of the specimens is further raised to 220°C and a maximum load of 18.9 kN is applied via the push rod 38 over a period of 2 minutes (the load of 18.9 kN components to a pressure of 158 MPa). The load of 18.9 kN is maintained for 5 minutes by which time the specimen temperature has risen to approximately 320°C. Deformation of the specimens under these conditions is a compressive deformation of approximately 5% of the thickness at the joint area. After the above bonding sequence the applied load is removed and the bonded sample allowed to air cool.

After the bonding treatment the samples are heat treated, both to solution treat the alloy and to diffuse away silver from the bond interface. Heat treatment comprises essentially of heating for 3 hours in a salt bath at 480°C followed by water quenching. Specific heat treatment conditions, however, will depend to a great extent on the requirements of the actual alloys being joined.

Lap joints prepared by the above process were tested in shear in a Hounsfield Tensometer testing machine. Results of tests gave a shear strength of 105 MPa. It will be appreciated that this figure is higher than the nominal shear strength of Al—1% Zn alloy (approximately 80 MPa), this is attributed to diffusion of strengthening elements from the 7010 alloy into the cladding and also to some solid solution strengthening due to the diffused silver coating.

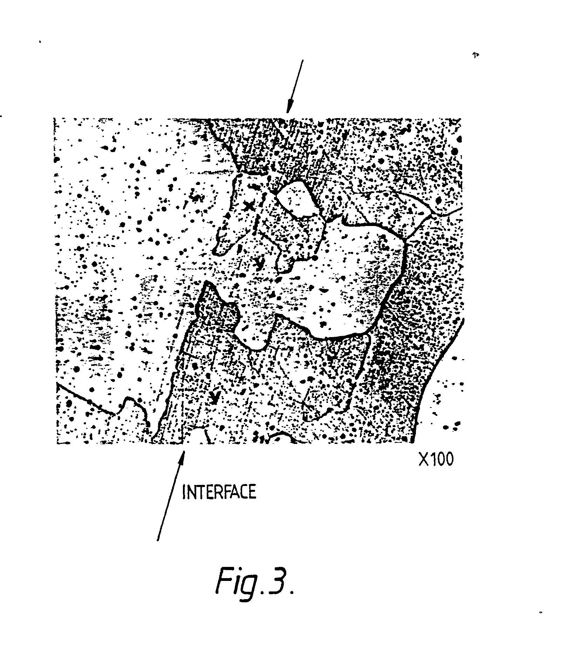

Figure 3 shows the homogeneity of the resulting interface, showing uninterrupted grain growth across the joint interface. This amply demonstrates that the aluminium oxide film has been adequately removed and, moreover, prevented from reforming by the process of the invention since grain growth across the interface would otherwise have been impeded.

To prevent the formation of undesirable compounds at the interface the coating metal must be kept sufficiently thin whilst still retaining its function of preventing reoxidation of the aluminium. The thickness of coating should be in the range 10 to 1000 nm, since below 10 nm the control of coating thickness become difficult. It will be appreciated that thinner silver coatings than the 700 nm cited in the example will require less time to diffuse away from the bond interface.

The example quoted above was an elemental coating of silver wherein the initial stages of coating are effected by silver ions and hence is termed ion-plating. After the initial stage, however, the bulk of the coating may be applied by evaporative deposition, instead of ion-plating.

The above method is suitable for elemental coatings but as the person skilled in the art will realise the invention is not restricted to elemental coatings. The invention may be effected by coatings based on binary, ternary or any other suitable alloy systems. When depositing a particular binary or ternary alloy control of the composition is extremely difficult when using a molten metal source. A more reliable alternative method would be that of sputter ion plating of the aluminium based alloy using a solid source of the desired coating alloy. An advantage of sputter ion plating is that sources may be made from other than melted and prealloyed constituents. A source could be made from physical combinations, for example, a bundle of wires of the required constituent elements in the correct proportions, the end face of the bundle being the sputter source.

Coatings, which of course may include elemental coatings, applied by the alternative method of sputter ion plating will self evidently be wholly applied by ion plating.

Particularly attractive alloy systems are those based on magnesium-lithium, magnesium-silver and magnesium-zinc.

Dissimilar alloys may also be joined provided that no brittle phases are formed at the interface during bonding and/or subsequent heat treatment.

A reliable process for the production of high strength diffusion bonded joints in aluminium alloys such as the invention provides makes feasible the process for simultaneous diffusion bonding and superplastic forming as is employed for titanium alloys. Aluminium alloys suitable for superplastic forming have been reported in the technical press.

**Claims**

1. A bonding process for aluminium based materials, which process includes:

i. removing the oxide film from the materials, in at least the regions to be bonded, by an ion bombardment technique; and

ii. depositing a coating of a metal, which has a thermally degradable oxide, upon the thus treated materials in at least the regions to be bonded, wherein at least the initial stage of the coating process is performed by ion plating and commenced whilst the ion bombardment treatment is maintained;

the processing being characterised is that it is a diffusion bonding process for aluminium based materials (such processes being known per se), in that it utilises clad materials (such materials being known per se) and in that it comprises the following features in combination:

a. deposition in the aforementioned deposition, of a coating of a metal which in addition to having a thermally degradable oxide is one having substantial solubility in the aluminium based material at the temperature of diffusion bonding, the deposition being to a thickness of 10—1000 nm;

b. solid state diffusion bonding the coated aluminium based materials together; and

c. solution heat treating the bonded materials to diffuse away from the bond interface concentrations of the coating metal.

2. A diffusion bonding process as claimed in claim 1 further characterised in that the solution heat treatment step is at a temperature of approximately 480°C and lasts for at least 3 hours.

3. A diffusion bonding process as claimed in claim 1 or claim 2 characterised in that the coating is applied in part by vapour deposition from molten metal.

4. A diffusion bonding process as claimed in claim 1 or claim 2 characterised in that the coating is applied by sputter ion plating.

5. A diffusion bonding process as claimed in any one of the preceding claims characterised in that the diffusion bonding process is combined with a simultaneous superplastic forming operation.

**Patentansprüche**

1. Beschichtungsverfahren für Materialien auf Aluminiumbasis, welches umfaßt:

i) Entfernen des Oxidfilms von den Materialien mindestens in den zu beschichtenden Bereichen durch eine Ionenbeschußtechnik, und

ii) Aufbringen eines Überzugs aus einem Metall, das ein thermisch zersetzbares Oxid hat, auf die so behandelten Materialien mindestens in den zu beschichtenden Bereichen, wobei mindestens die anfängliche Phase des Überzugsverfahrens durch Ionenbeschichtung ausgeführt und begonnen wird, während die Ionenbeschußbehandlung aufrechterhalten wird,

dadurch gekennzeichnet, daß das Verfahren ein Diffusionsbeschichtungsverfahren für Materialien auf Aluminiumbasis ist (solche Verfahren sind an sich bekannt), daß Plattierungsmaterialien verwendet werden (solche Materialien sind an sich bekannt) und daß es folgende Merkmale in Kombination aufweist:

a) Aufbringen im oben erwähnten Aufbringungsschritt eines Überzugs aus einem Metall, das zusätzlich dazu, daß es ein thermisch zersetzbares Oxid hat, bei der Temperatur der Diffusionsbindung eine beträchtliche Löslichkeit in dem Aluminiumbasismaterial hat, und wobei der Überzug eine Dicke von 10 bis 1000 nm hat,

5

b) Festkörperdiffusionsbindung der überzogenen Aluminiumbasismaterialien miteinander, und

c) Lösungsglühbehandlung der verbundenen Materialien zum Wegdiffundieren von den Bindungsgrenzflächenkonzentrationen des Überzugsmetalls.

2. Diffusionsbeschichtungsverfahren nach Anspruch 1, dadurch gekennzeichnet, daß der Lösungsglühbehandlungsschritt bei einer Temperatur von etwa 480°C stattfindet und mindestens drei Stunden dauert.

3. Diffusionsbeschichtungsverfahren nach Anspruch 1 oder Anspruch 2, dadurch gekennzeichnet, daß der Überzug teilweise durch Aufdampfen aus geschmolzenem Metall aufgebracht wird.

4. Diffusionsbeschichtungsverfahren nach Anspruch 1 oder Anspruch 2, dadurch gekennzeichnet, daß der Überzug durch Ionensprühbeschichtung aufgebracht wird.

5. Diffusionsbeschichtungsverfahren nach einem der vorhergehenden Ansprüche, dadurch gekennzeichnet, daß das Diffusionsbeschichtungsverfahren mit einem gleichzeitigen superplastischen Formungsvorgang kombiniert wird.

## Revendications

1. Procédé destiné à joindre des matériaux à base d'aluminium, lequel procédé comprend les étapes consistant à:

i) enlever la pellicule d'oxyde des matériaux, au moins dans les zones que l'on veut joindre, par une technique de bombardement ionique; et

ii) déposer un revêtement d'un métal, lequel comporte un oxyde dégradable thermiquement, sur les matériaux ainsi traités au moins dans les zones à joindre, dans laquelle opération au moins la phase initiale du procédé de revêtement est réalisée par plaquage ionique et mise en route tandis que le traitement par bombardement ionique est maintenu,

le traitement étant caractérisé en ce qu'il s'agit d'un procédé de jonction par diffusion de matériaux à base d'aluminium (de tels procédés étant connus en eux-mêmes), en ce qu'il utilise des matériaux plaqués (de tels matériaux étant connus en eux-mêmes) et en ce qu'il comprend les caractéristiques suivantes en combinaison:

a) dépôt selon le procédé mentionné ci-dessus d'un revêtement d'un métal, lequel outre le fait de comporter un oxyde dégradable thermiquement, présente une solubilité substantielle dans le matériau à base d'aluminium à la température de jonction par diffusion, le dépôt étant jusqu'à une épaisseur de 10—1000 nm;

b) jonction mutuelle par diffusion à l'état solide des matériaux revêtus à base d'aluminium; et

c) traitement thermique en solution des matériaux joints pour enlever par diffusion de l'interface de jonction, des concentrations de métal de revêtement.

2. Procédé de jonction par diffusion selon la revendication 1, caractérisé de plus en ce que l'étape de traitement thermique en solution est à une température d'environ 480°C et dure au moins 3 heures.

3. Procédé de jonction par diffusion selon la revendication 1 ou la revendication 2, caractérisé en ce que le revêtement est appliqué en partie par vaporisation à partir du métal en fusion.

4. Procédé de traitement par diffusion selon la revendication 1 ou la revendication 2, caractérisé en ce que le revêtement est appliqué par plaquage ionique en pulvérisation.

5. Procédé de jonction par diffusion selon l'une quelconque des revendications précédentes, caractérisé en ce que le procédé de jonction par diffusion est combiné à une opération de formage superplastique simultanée.

*Fig.1.*

1

Fig.2.

X100

INTERFACE

*Fig.3.*